**Europäisches Patentamt**

**European Patent Office**

**Office européen des brevets**

(19)

(11) Veröffentlichungsnummer : **0 551 297 B1**

(12)

# EUROPÄISCHE PATENTSCHRIFT

(45) Veröffentlichungstag der Patentschrift :
27.07.94 Patentblatt 94/30

(51) Int. Cl.⁵ : **B01J 20/20, C01B 31/08**

(21) Anmeldenummer : **91916073.9**

(22) Anmeldetag : **20.09.91**

(86) Internationale Anmeldenummer :
**PCT/EP91/01796**

(87) Internationale Veröffentlichungsnummer :
**WO 92/05868 16.04.92 Gazette 92/09**

(54) **VERFAHREN ZUR HERSTELLUNG VON KOHLENSTOFFMOLEKULARSIEBEN.**

(30) Priorität : **05.10.90 DE 4031580**

(43) Veröffentlichungstag der Anmeldung :
**21.07.93 Patentblatt 93/29**

(45) Bekanntmachung des Hinweises auf die
Patenterteilung :
**27.07.94 Patentblatt 94/30**

(84) Benannte Vertragsstaaten :
**BE DE GB NL**

(56) Entgegenhaltungen :
**EP-A- 0 119 924
EP-A- 0 360 247
DE-A- 2 119 829
DE-C- 3 618 426
Chemical Abstracts, vol.102,no.20, Mai 1985,
Columbus, Ohio,US, Abstract no.169053**

(73) Patentinhaber : **Bergwerksverband GmbH
Franz-Fischer-Weg 61
D-45307 Essen (DE)**

(72) Erfinder : **HENNING, Klaus, Dirk
Steinhagen 8
D-4300 Essen 14 (DE)**
Erfinder : **BONGARTZ, Wolfgang
Dünnerstrasse 194
D-4050 Mönchengladbach (DE)**
Erfinder : **WYBRANDS, Klaus
Am Pappelbusch 12
D-4630 Bochum 1 (DE)**
Erfinder : **DEGEL, Josef
Am Kronenberg 3
D-4320 Hattingen 16 (DE)**
Erfinder : **KNOBLAUCH, Karl
Forsthaussstrasse 22
D-4300 Essen 1 (DE)**
Erfinder : **ZIEGLER, Alois
Am Vogelherd 17
D-4300 Essen 16 (DE)**

**Beschreibung**

Die Erfindung betrifft ein Verfahren zur Herstellung von Kohlenstoffmolekularsieben gemäß dem Oberbegriff des Anspruchs.

Es ist aus der DE-C 36 18 426 und der darin zitierten DE-C 21 19 829 bekannt, Kohlenstoffmolekularsiebe für die Trennung kleinmolekularer Gase, insbesondere $O_2$ und $N_2$ dadurch herzustellen, daß feingemahlene Steinkohle in einer Wirbelschicht mit Luft oxidiert, die Kohle nach Zugabe von Bindemittel und Wasser geformt und bei Temperaturen bis 900° C geschwelt, anschließend bei Temperaturen von 800 - 900° C mit Wasserdampf aktiviert und das schwachaktivierte Vorprodukt bei 750 - 850° C mit kohlenstoffabspaltenden Kohlenwasserstoffen behandelt wird.

Die so hergestellten Kohlenstoffmolekularsiebe werden in Druckwechsel-Verfahren zur Stickstoffgewinnung aus Luft eingesetzt. Die Betriebskosten von Druckwechsel-Verfahren bestehen überwiegend aus Kompressionskosten für die zu komprimierende Luft. Der sogenannte spezifische Luftbedarf, d. h. das Verhältnis der eingesetzten Luftmenge zur erzeugten Stickstoffmenge (m$^3$ Luft/m$^3$ Stickstoff) sollte möglichst gering sein. Dieser spezifische Luftbedarf ist unmittelbar mit der Sauerstoffaufnahmefähigkeit des Kohlenstoffmolekularsiebes verknüpft, die sich aus dem Unterschied in den Diffusionsgeschwindigkeiten von Stickstoff und Sauerstoff in dem Kohlenstoffmolekularsieb ergibt.

Der Erfindung liegt die Aufgabe zugrunde, ein Kohlenstoffmolekularsieb mit verbesserter Sauerstoffaufnahmefähigkeit herzustellen, so daß die Energiekosten bei der Stickstoffgewinnung aus Luft reduziert werden.

Diese Aufgabe wird dadurch gelöst, daß als Bindemittel Stärken, die durch Umsetzung verkleisterter Stärken mit Sulfamaten erhältlich sind, eingesetzt werden. Derartige Stärken sind in der EP-A-0 129 227 beschrieben.

Die erfindungsgemäß hergestellten Kohlenstoffmolekularsiebe weisen gute mechanische Festigkeiten auf, die vergleichbar mit Kohlenstoffmolekularsieben sind, bei denen Steinkohlenteerpech als Bindemittel eingesetzt wird. Die Stoßhärte (H. von Kienle, E. Bäder; "Aktivkohle und ihre industrielle Anwendung", F. Enke Verlag, Stuttgart 1980, S. 57) lag sowohl bei Verwendung von Steinkohlenteerpech als auch von Stärke bei 90 % > 0,5 mm .

Die Sauerstoffaufnahmefähigkeit bezüglich der Trennung von Stickstoff und Sauerstoff wird mit einer Testmethode bestimmt, die den Unterschieden in den Diffusionsgeschwindigkeiten von Stickstoff und Sauerstoff Rechnung trägt (1 Minuten-Test).

Ein mit dem zu testenden Kohlenstoffmolekularsieb gefüllter Adsorber (200 ml Inhalt) wird eine Minute lang von Luft durchströmt, die von einer Luftpumpe unter einem Druck von 1013 mbar zugeführt wird. In dieser Zeit nimmt das im Adsorber enthaltene Kohlenstoffmolekularsieb aufgrund seines Porengefüges Gas auf, wobei der Sauerstoff wegen der höheren Diffusionsgeschwindigkeit bevorzugt vor dem Stickstoff adsorbiert wird. Der Stickstoff passiert größtenteils die Trennporen und tritt am Ende des Adsorbers wieder aus. Nach einer Minute wird dieser Vorgang beendet und der Adsorber wird im Gegenstrom mittels eine Vakuumpumpe auf 40 mbar evakuiert. Hierbei wird ein an Sauerstoff angereichertes Gas gewonnen, das in einen Gasometer eingebracht wird. Die desorbierte Gasmenge, bezogen auf das Volumen des Kohlenstoffmolekularsiebes (Relativvolumen RV = l Gas/l CMS) und die maximale sowie die mittlere Sauerstoffkonzentration des Desorptionsgases werden gemessen. Beide Sauerstoffkonzentrationen sind gegeüber der Sauerstoffkonzentration in Luft (21 Vol.-%) erhöht. Das ermittelte Relativvolumen sollte zwischen 2,0 und 2,6 liegen. Mit abnehmendem Relativvolumen steigt der mittlere Sauerstoffgehalt an.

Ein Maß für die Sauerstoffaufnahmefähigkeit eines Kohlenstoffmolekularsiebes ist die Höhe des mittleren Sauerstoffgehaltes (bei vorgegebenen RV-Wert) im Desorptionsgas dieses Tests. Je höher der mittlere Sauerstoffgehalt bei gleichem Relativvolumen ist, desto günstiger ist die Trennleistung in der technischen Druckwechsel-Anlage. Von einem guten Kohlenstoffmolekuarsieb zur Stickstoffgewinnung aus Luft wird gefordert, daß beim Durchströmen einer Kohlenstoffmolekularsieb-Schüttung mit Luft pro Zeiteinheit eine möglichst große spezifische Menge an Sauerstoff (l Sauerstoff/l CMS) aus der Luft adsorbiert wird und somit ein sauerstoffarmer Stickstoff den Adsorber verläßt.

Zur vergleichenden Bewertung der Kohlenstoffmolekularsiebe können die beschriebenen Meßwerte des 1 min-Tests herangezogen werden, denn die aufgenommene Sauerstoff-Menge kann aus den Meßwerten Relativvolumen und mittlerer Sauerstoffgehalt errechnet werden. Wird das 1 min-Relativvolumen mit dem mittleren Sauerstoffgehalt multipliziert, so erhält man die spezifische Sauerstoff-Aufnahme des Kohlenstoffmolekularsiebes.

$$\text{spez. Sauerstoff - Aufnahme (l/l)} = \frac{\text{Relativvolumen(l/l) x mittl.} O_2 - \text{Konz. (Vol.} - \%)}{100 \,(\text{Vol.} - \%)}$$

Je höher die spezifische Sauerstoff-Aufnahme (l $O_2$/l CMS) ist desto besser sind die Trenneigenschaften des Kohlenstoffmolekularsiebes.

Im Bereich der 1 min-Relativvolumina von 2,0 - 2,6 kann die Sauerstoffaufnahmefähigkeit der Kohlenstoffmolekularsiebe wie folgt bewertet werden:

```
          Sauerstoff-Aufnahme            CMS-Qualität


            < 1,05 1/1                 normale Qualität
            1,05 - 1,15 1/1               gute Qualität
            > 1,15 1/1               sehr gute Qualität
```

Die erfindungsgemäß hergestellten Kohlenstoffmolekularsiebe weisen spezifische Sauerstoffaufnahmen von > 1,15 l/l auf.

Die Erfindung wird nachfolgend anhand der Beispiele näher beschrieben.

**Beispiel 1 (Vergleichsbeispiel)**

72 Gewichtsteile Fettkohle der Korngröße 100 % kleiner 80 μm, die in der Wirbelschicht mit Luft bei 230° C bis zu einem Sauerstoffgehalt von 12 Gew.-% behandelt wurden, werden mit 28 Gewichtsteilen Steinkohlenteerpech (Weichpech, Erweichungspunkt nach Krämer-Sarnow 50 - 55° C) unter Zusatz von 20 kg Wasser/100 kg Feststoff (oxidierte Fettkohle und Steinkohlenteerpech) bei Temperaturen von 70° C gemischt. Die Mischung wird in einer Strangpresse zu zylindrischen Formkörpern von 2 mm Durchmesser geformt. Diese Formkörper werden in einem kontinuierlich betriebenen Drehrohrofen bis zum Erreichen einer Endtemperatur von 880° C geschwelt. Das Schwelgut wird anschließend in einem weiteren Drehrohrofen bei Temperaturen von 810° C mit Wasserdampf aktiviert. Die Verweilzeit beträgt 65 min. Das Reaktionsgas enthält 75 Vol.-% Wasserdampf. Die Aktivierung wird so geführt, daß ein Aktivierungsgrad von 5 % erreicht wird. Das erhaltene Aktivat wird anschließend in einem Vibro-Ofen mit Benzol nachbehandelt. Dabei wird ein Stickstoff-Benzol-Gemisch mit 8 Vol.-% Benzol im Gegenstrom bei 800° C durch den Vibro-Ofen geführt. Die Eigenschaften des erhaltenen Kohlenstoffmolekularsiebes sind der Tabelle 1 zu entnehmen.

**Beispiel 2**

66,7 Gewichtsteile der in Beispiel 1 beschriebenen oxidierten Steinkohle werden mit 6,7 Gewichtsteile Stärke (Cerestar AJ 12891 der Fa. Cerestar, Krefeld) und 26,6 Gewichtsteile Wasser gemischt und im Extruder zu zylindrischen Formkörpern von 2 mm Durchmesser geformt. Nach einer Trocknung bei 105° C werden die Formkörper wie im Beispiel 1 geschwelt und aktiviert. Die Benzol-Behandlung im Vibro-Ofen wurde wie im Beispiel 1 beschrieben durchgeführt. Die sehr guten Eigenschaften des Kohlenstoffmolekularsiebes sind der Tabelle 1 zu entnehmen.

**Beispiel 3**

60 Gewichtsteile der in Beispiel 1 beschriebenen oxidierten Steinkohle werden mit 12 Gewichtsteile Stärke (Cerestar AJ 12891 der Fa. Cerestar, Krefeld) und 28 Gewichtsteile Wasser gemischt und im Extruder zu zylindrischen Formkörpern von 2 mm Durchmesser geformt. Nach einer Trocknung bei 105° C werden die Formkörper wie im Beispiel 1 geschwelt und aktiviert. Die Benzol-Behandlung im Vibro-Ofen wurde wie im Beispiel 1 beschrieben durchgeführt. Die sehr guten Eigenschaften des Kohlenstoffmolekularsiebes sind der Tabelle 1 zu entnehmen.

Tabelle 1:  Beispiele

| | Beispiel 1 Vergleichsbeispiel | Beispiel 2 | Beispiel 3 |
|---|---|---|---|
| Einsatzvolumen (ml) | 200 | 200 | 200 |
| Desorbierte Gasmenge (ml) | 490 | 490 | 466 |
| mittlere $O_2$-Konzentration (Vol.%) | 40,8 | 50,8 | 52,2 |
| Relativvolumen (l/l) | 2,45 | 2,45 | 2,33 |
| Sauerstoff-Aufnahme (l/l) | 1,00 | 1,24 | 1,22 |

**Patentansprüche**

1. Verfahren zur Herstellung von Kohlenstoffmolekularsieben für die Trennung von Sauerstoff und Stickstoff, bei dem feingemahlene Steinkohle in einer Wirbelschicht mit Luft oxidiert, die Kohle nach Zugabe von Bindemittel und Wasser geformt und bei Temperaturen bis 900° C geschwelt, anschließend bei Temperaturen von 800 - 900° C mit Wasserdampf aktiviert und das schwachaktivierte Vorprodukt bei 750 - 850° C mit kohlenstoffabspaltenden Kohlenwasserstoffen behandelt wird, **dadurch gekennzeichnet, daß** als Bindemittel Stärken, die durch Umsetzung verkleisterter Stärken mit Sulfamaten erhältlich sind, eingesetzt werden.

## Claims

1. A process for producing carbon molecular sieves for separation of oxygen and nitrogen, wherein fine-ground hard coal is oxidised with air in a fluidized bed, the coal is moulded after the addition of a binding agent and water, and is carbonised at temperatures up to 900°C, and is subsequently activated with water vapour at temperatures of 800 - 900°C, and the weak-activated intermediate product is treated with carbon-cleaving hydrocarbons at 750 - 850°C, **characterised in that** starches, which can be obtained by reaction of gelatinised starches with sulphamates, are used as a binding agent.

## Revendications

1. Procédé de préparation de tamis moléculaires de carbone pour la séparation de l'oxygène et de l'azote, conformément auquel on oxyde de la houille finement broyée en couche turbulente ou fluidisée avec de l'air, on moule le charbon après addition de liants et d'eau et on le soumet à un traitement thermique à des températures allant jusqu'à 900°C, on l'active ensuite à des températures de 800-900°C avec de la vapeur d'eau et on traite le produit de tête faiblement activé à 750-850°C par des hydrocarbures libérant du carbone, caractérisé en ce que l'on utilise, à titre de liants, des amidons que l'on peut obtenir par la réaction d'amidons gélifiés avec des sulfamates.